# EUROPEAN PATENT SPECIFICATION

(11) **EP 0 716 567 B1**
(45) Date of publication and mention of the grant of the patent: **06.12.2000**
(21) Application number: 95923588.8
(22) Date of filing: 29.06.1995
(51) Int. Cl.: A01J 5/017, A01K 1/12

(54) **A CONSTRUCTION INCLUDING AN IMPLEMENT FOR AUTOMATICALLY MILKING ANIMALS**
VORRICHTUNG MIT EINEM GERÄT ZUM AUTOMATISCHEN MELKEN VON TIEREN
CONSTRUCTION COMPRENANT UN DISPOSITIF DE TRAITE AUTOMATIQUE

(30) Priority: 04.07.1994 NL 9401114
(43) Date of publication of application: 19.06.1996
(60) Divisional application: 00201674.9
(73) Proprietor: MAASLAND N.V., 3155 PD Maasland (NL)
(72) Inventor: VAN DER LELY, Cornelis, CH-6300 Zug (CH)
(74) Representative: Corten, Maurice Jean F.M.
(86) International application number: NL9500231
(87) International publication number: WO9601041

(56) References cited:
- EP-A- 0 091 892
- EP-A- 0 545 916
- EP-A- 0 551 960
- EP-A- 0 804 874
- EP-A- 0 857 418

## Description

The present invention relates to a construction as described in the preamble of claim 1.

Such a construction is known from EP-A-0 545 916. This construction has the disadvantage that part of the milking robot during milking is situated inside the milking box as a result of which the animal can kick against the milking robot during milking. So as to prevent that an animal can kick against the milking robot during milking, the construction is characterized by the features as defined in claim 1. The teat cup remains in connection with the respective robot arms by means of a flexible connecting element, such as a cord. According to a feature of the invention the milk tube is preferably of such a design that during milking it is movable with a slight resistance along or at a slight height above the floor of a milking box.

More in particular, a milk tube can extend during milking freely movably under a robot arm which is part of the milking robot. If the milk tube is not secured to the robot arm, the tube will be capable of moving more freely. During milking the milk tube can extend in a mainly horizontal plane and be movable in this plane. In this situation, the milk tube may in many cases be, seen in a plan view, in the shape of a loop, more specifically in the shape of a U. More in particular, a milk tube can extend, during milking, from the teat cup to which the milk tube is connected, taken in a plan view, obliquely forwardly in the direction of walk of the animal and outwardly and from there may extend in the shape of a loop. The milk tubes connected to the several teat cups can extend from the teat cups at both sides of a milking box to as far as aside of the milking box. More in particular, a milk tube may extend in the shape of a loop to a point of connection of a milk line, disposed at the side of a milking box.

When a teat cup is to be uncoupled, then the relevant robot arm may be moved towards the teat on which the teat cup has been fitted, whilst simultaneously or shortly thereafter the teat cup may be pulled up against the robot arm and the robot arm may be thereafter moved, at least mainly, to outside the milking box. In a preferred embodiment, each robot arm acts as a carrier for only one teat cup, so that consequently four of these robot arms are present in the milking robot. On the other hand, a robot arm may also act as a carrier for two teat cups, in which case two robot arms are present in the milking robot; these robot arms can then be disposed, for example, on both sides of the relevant milking box. Expressed in a more general way, a milking robot can include at least two robot arms, which are movable independently of each other and act as a carrier for one or more teat cups, which robot arms are arranged on both sides of or near a milking box and wherein, in a specific embodiment, the robot arms are provided with adjusting means disposed one above the other, which, in a spatial view, results in an advantageous disposition. The adjusting means may include a four-bar linkage, with the aid of which a robot arm is movable in the upward direction. In addition, the adjusting means may include a further four-bar linkage, with the aid of which a teat cup is movable from the side of a milking box to under the udder of an animal standing therein. This further four-bar linkage is preferably connected to the said first four-bar linkage in such a manner that it is rotating around a mainly vertical shaft. The two four-bar linkages and the pivotability about the said vertical shaft, provides an omnidirectional motional capability of the robot arm and consequently also of the teat cup or teat cups connected thereto. A robot arm may accommodate an adjusting cylinder, more in particular a pneumatic cylinder, with the aid of which, through the intermediary of the aforesaid flexible element, a teat cup can be pulled up against the robot arm and optionally can be maintained in that position.

To determine the position of the teats of the animal, a detector, more in particular a laser detector, may be present, which detector will preferably be disposed on a separate robot arm construction. Thereby the detector can always be moved to such a position under the animal that the teats, whatever their position and how closely they may be located relative to each other, can always be detected. The detection of the position of the teats can be further facilitated if the detector can be moved from a rest position at or near the side of a milking box to a first and a second working position, whilst in one of these working positions the position of a teat of an animal standing in the milking box can be determined. More in particular, it is possible in the first working position to determine the positions of two teats, e.g. the front pair and in the second working position the positions of the other two teats, e.g. the rear pair.

When no animal is being milked, then the teat cups may be in the rest position at or near a side or at or near the sides of a milking box. In an advantageous embodiment in accordance with the invention, the teat cups are automatically cleaned precisely in this rest position. For that purpose, spray heads connected to a washing circuit may have been disposed at or near both sides of a milking box, to which the teat cups are connectable independently of each other. When four robot arms are used, each of which acts as a carrier of one teat cup, and when these robot arms are arranged two by two on either side of a milking box, then the spray heads will have been disposed two by two at or near both sides of the milking box. These specific locations are such that in their rest position, in which they are pulled up against a corresponding robot arm, the teat cups are in connection with the spray heads.

For a better understanding of the invention and to show how the same may be carried into effect, reference will now be made, by way of example, to the accompanying drawings, in which:
Figure 1 is a side view of a milking box of the invention;
Figure 2 is a rear view of a milking robot, a teat cup being connected to a teat of an animal standing in the milking box;
Figure 3 is a rear view of the milking robot, wherein the teat cups are connected to the teats of an animal present in the milking box and wherein the robot arm is thereafter retracted to outside the milking box;
Figure 4 is a plan view of the milking box with the milking robot, wherein the teat cups have all four been connected to the teats of an animal standing in the milking box and wherein the robot arms have thereafter been retracted to outside the milking box;
Figure 5 is a side view of a milking box accommodating a cow, of which the front and rear teats are at unequal heights, and in which figure a detector is shown in the position in which it can determine the location of the rear teats, and
Figure 6 is a plan view of the milking box shown in Figure 5 containing the detector, and the manner in which this detector is movable and cleanable.

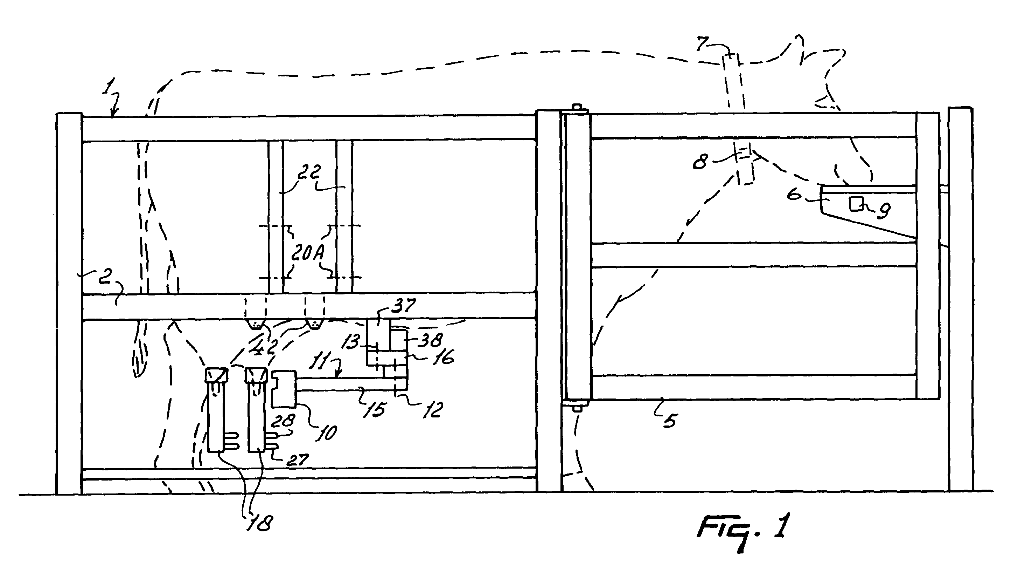

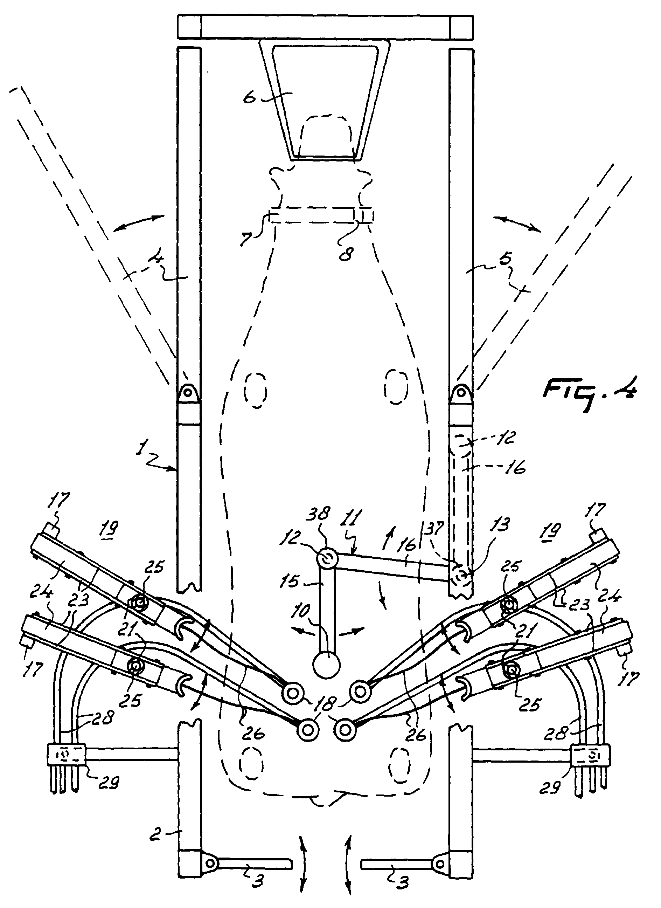

Figure 1 shows, in a side view, a milking box 1 in which a cow to be milked is present. The milking box 1 includes a railing 2 which limits the milking box at all four sides, an entrance door 3 at the rear side and two exit doors 4 and 5 having been arranged in this railing at the two longitudinal sides (see Figure 4). Via one of these exit doors the animal can be conducted from the milking box to a shed area or a pasture, whilst via the other door the animal can be conducted to a special isolation area, e.g. because mastitis has been detected during milking. The entrance and exit doors are under the control of a computer system, not further shown. At the leading side of the milking box 1 a feeding trough 6 has been disposed, which is part of an automatic feeding system. The animals to be milked wear a collar 7, which is equipped with a transponder 8 which cooperates with a sensor 9 disposed at or near the feeding trough 6. When an animal enters the milking box 1 and has advanced that far that it can put its head into the feeding trough 6, the distance between the transponder 8 and the sensor 9 is such that communication between the two elements 8 and 9 occurs. The transponder 8 and the sensor 9, which is connected to the computer system, constitute an animal identification system. As soon as communication between the transponder 8 and the sensor 9 becomes possible, the animal is identified, which has for its result that a file stored for this animal in the memory of the computer system becomes accessible, which file includes various data, such as data for the automatic supply of food, the automatic connection of the teat cups and the subsequent automatic milking operation and for monitoring the heath condition of this animal.

After the animal has entered the milking box 1 and has been identified therein, a detector 10, here in the form of a laser detector, is moved to under the animal. In the Figures 1 and 4, the detector 10 is disposed on a robot arm system 11, formed by robot arms 15 and 16 which are pivotal about round vertical shafts 12 and 13, this robot arm system 11 being attached to the railing 2 in such a manner that it is pivotal about the shaft 13. The robot arms 15 and 16 are pivotal with the aid of computer-controlled motors 37 and 38, for which stepping motors are preferably employed. Using the detector 10, the position of the teats relative to the milking box 1 can be determined, whereafter teat cups 18 can be fitted on the teats. The detector 10 and the means for fitting the teat cups 18 to the teats together form a milking robot. In the embodiment shown, these means include a separate robot arm construction 9 for each of the teat cups 18. Such a robot arm construction 19 includes a first four-bar linkage 20, with the aid of which a vertical carrier 21 is connected capable of moving in the upward direction to frame portions 22 of the railing 2. The pivotal shafts, by means of which this four-bar linkage is connected to the frame portions, are denoted by 20A. At the lower side of the carrier 21 there is present a second four-bar linkage 23, with the aid of which a robot arm 24 is movable from outside the milking box 1 into the milking box to under an animal present therein and can again be retracted to outside the milking box. This robot arm 24 is furthermore pivotal about a vertical shaft 25 relative to the carrier 21. Each of the robot arms 24 acts as a carrier for one or the teat cups 18. By means of the first and second four-bar linkages 20 and 23, respectively, and the pivotal construction about the shaft 25, the teat cup 18 connected to the robot arm 24 can be moved omnidirectionally. In the embodiment shown, the pivotal motion of the robot arm 24 round the shaft 25 is realized by a computer-controlled motor 14, the reciprocal motion of the robot arm 24 relative to the carrier 21 by a computer-controlled motor 17, whilst the up-and-down motion is realized with the aid of the first four-bar linkage by a computer-controlled operating cylinder 41, preferably a pneumatic cylinder. The motors 14 and 17 are preferably stepping motors.

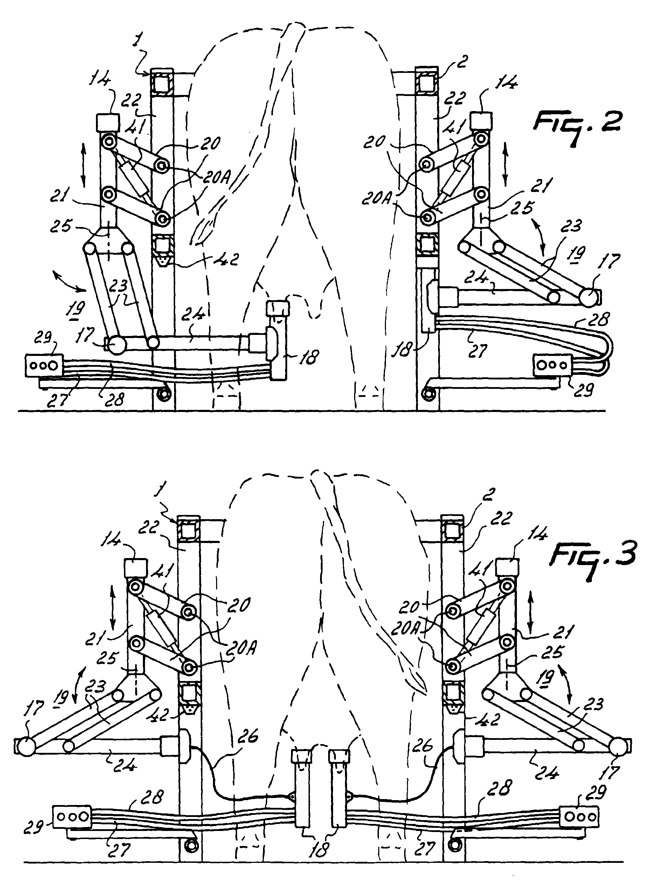

A teat cup 18 is connected to the robot arm 24 by means of a flexible element, such as a cord 26, which cord is not only connected to a teat cup 18 but also to an operating cylinder, preferably a pneumatic cylinder, accommodated in the robot arm 24. If, as is shown in Figure 2, a teat cup 18, carried by the robot arm 24, is fitted on a teat, then, as soon as the teat cup 18 has been sucked to the teat with the aid of the vacuum produced therein, the cylinder accommodated in the robot arm 24 will be enabled, so that the robot arm 24 can be retracted to outside the milking box 1 and the teat cup 18 remains connected to the robot arm 24 only by the cord 26 and will, therefore, have a sufficient freedom of movement to track the animal's movements. In this situation, it may happen that the teat cups 18 are inhibited in their free motional capability by milk tubes 27 and possible pulsation tubes 28, more in particular when these tubes have been secured to the robot arm construction 19. It is, therefore, advantageous when the tubes 27, 28 can move as freely as possible and do not hamper the teat cups 18 when they follow the animal's movements. To that end, the tubes 27, 28 connected to the teat cups 18 extend during milking, taken in a plan view, from the teat cups to which these tubes are connected, obliquely forwardly in the direction of walk of the animal and outwardly and thereafter the tubes extend in the shape of a loop (see Figure 4). From the teat cups the tubes 27, 28 extend to both sides of the milking box to beside the milking box. The tubes extend in the shape of a loop to the points of connection 29, provided at the side of the milking box, for the tubes 27, 28. The loop-shaped arrangement of the tubes increases the free motional capability of the teat cups. The further milk lines and vacuum lines of the milking system are connected to the points of connection. As two robot arm constructions 19 are disposed on both sides of the milking box 1, only one point of connection 29 on both sides is sufficient. Of course, there may be a point of connection for the tubes 27, 28 for each robot arm construction. Since the robot arms 24 are movable from outside the box obliquely rearwardly and inwardly to under the animal, the tubes 27 and 28 will first extend from a teat cup approximately in the same direction as in which the relevant robot arm 24 is located, whereafter the tubes extend in the shape of a loop transversely underneath the robot arm to the relevant point of connection 29. As between the teat cups 18 and the points of connection 29 the tubes are not connected to anything else, they can move freely near the milking box floor. Consequently, they experience a slight resistance and will substantially not obstruct the motion of the teat cups. When the teat cups have been connected to the teats, then the tubes 27, 28 will extend in a mainly horizontal plane and the tubes will be movable in this plane (see Figure 3). When the teat cups are to be uncoupled, then, because of the fact that the robot arms have been moved to outside the milking box during milking, these robot arms must first be moved towards the teat cups, whilst then simultaneously or shortly thereafter the operating cylinders in the robot arms 24 can be energized in order to pull the teat cups up against the holder at the end of the robot arm 24. Since there are four robot arm constructions 19 which operate independently of each other, the teat cups can be coupled both simultaneously and one after the other and independently of each other to the teats of an animal. Also uncoupling of a teat cup can be effected independently of the other teat cups.

When, after the milking operation has ended, a teat cup 18 has been pulled up against a relevant robot arm 24 and this arm has thereafter been returned to its position of rest outside the milking box, the teat cup can be automatically cleaned in this rest position. To that end (see Figures 1 to 3), spray heads 42 connected to a (non-shown) washing circuit are positioned at or near both sides of the milking box. Teat cups are connectable independently of each other to these spray heads 42, more in particular when the robot arms 24 carrying the teat cups 18 have been moved to their position of rest.

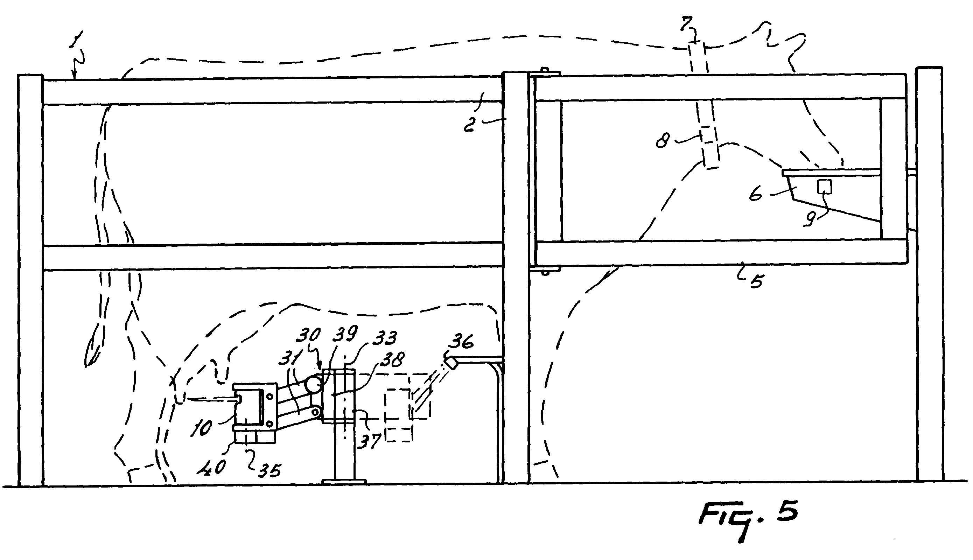

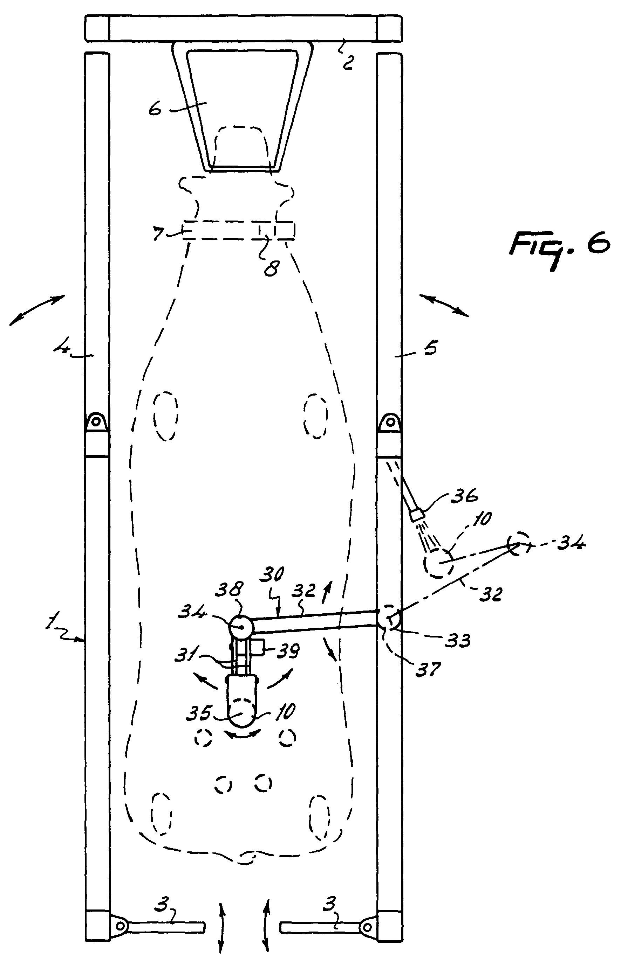

Contrary to the cow standing in the milking box shown in Figure 1, the cow in the milking box shown in Figure 5 has teats which are at unequal heights. It regularly happens that cows have teats which are located very closely next to each other and/or are at different heights. Because of the advantageous construction of a separate robot arm structure for the detector 10 in accordance with the invention, it becomes possible to determine also the position of such teats. Such a robot arm structure for the detector 10 is illustrated in Figures 5 and 6. The means for the connection of the teat cups have been omitted from these drawings. The detector 10 is located on a robot arm structure 30, which is of such a design that the detector is omnidirectionally or substantially omnidirectionally movable in the milking box. The detector 10 is connected via a four-bar linkage 31 to a robot arm 32, which is part of the robot arm structure 30. The robot arm 32 is pivotal about a vertical shaft 33, arranged at the side of the milking box 1. The four-bar linkage 31 itself is connected capable of pivoting about a vertical shaft 34 to the robot arm 32. The detector 10 is further connected, capable of pivoting about its own longitudinal shaft 35, to the four-bar linkage 31 (see Figure 5). Because of the feature that it is pivotal about the shafts 33, 34 and 35 and the feature that it is movable in height with the aid of the four-bar linkage 31, the detector 10 can move around the teats in all positions and more particularly always in such a position that the teats can be detected, whatever their positions relative to each other. The four-bar linkage 31 and the pivotability of the detector 10 about its own longitudinal shaft 35 renders it possible for the detector to effect a scanning motion in different directions, so that also teats differing from normal teats can be detected. The scanning motion in the upward direction can then be effected through at least approximately five centimetres and can preferably amount to approximately ten centimetres in the vertical direction. Should there be animals of which the difference in height between the front and rear teats of the udder is still larger, then the pivotal motion can be adapted thereto.

In the present invention, the detector is constituted by a laser detector and positioned as such in a housing having a window, through which the laser beam is transmitted. When this window gets dirty, the detection of the teats may not be sufficiently accurate. It is, therefore, important to provide the implement with means, with which the detector 10 can be cleaned. To enable cleaning in an efficient manner, the pivotal motion about the shafts 33 and 34 is such that the detector 10 can be moved to outside the milking box 1 to a cleaning position, as indicated by broken lines in Figure 6. In this position, the detector can then be cleaned using a cleaning member 36 provided for that purpose. This cleaning member 36 may include spraying and/or blowing means for spraying a cleaning agent or blowing air against the window of the detector 10, respectively.

Performing the pivotal motions about the shafts 33 and 34 and a motion in the upward direction by means of the four-bar linkage 31, as well as the rotation of the detector 10 about its own longitudinal shaft are monitored by computer-controlled motors, preferably stepping motors 37, 38, 39 and 40. Although in many cases the detector can be placed in a fixed working position, shown in Figure 6, it may sometimes be necessary for the detector 10 to be operative in a plurality of positions to enable a determination of the position of the various teats. Thus, it may be necessary for the detector 10 to be arranged for the determination of the position of the front teats in a first working position in the midway point between and before the leading teats, whilst for the determination of the position of the trailing teats the detector must be placed in a position further to the rear. It may alternatively be possible that the detector must not be arranged in the midway point between the teats, but more to the side; the latter will more specifically be the case when one teat would be in the shadow of the other teat relative to the detector or when two teats are very close to each other. Since the relative position of the teats of the several animals is known, this can be taken into account on arranging the detector in the working position under the animal. The computer system may include a control programme adapted to the individual animals for moving the detector to an animal-specific position under the udder, which control programme can be addressed with the aid of the animal identification system for the relevant animal. This animal-attuned control program can be triggered on the basis of data present in the computer system in the data file for each animal. The detector 10 consequently has a position of rest (indicated by broken lines in Figure 4), as well as a cleaning position (see Figure 6) and one or more working positions adapted to the individual animals.

The invention is in no way limited to the embodiments described here, but also comprises all the modifications which may be applied by a person skilled in the art and which are within the scope of the claims described hereafter.

## Claims

1. A construction including an implement for automatically milking animals, such as cows, having one or more milking boxes (1) and one or more milking robots for automatically coupling teat cups (18) to the teats of the animals, while during milking a milk tube (27) connected to a teat cup (18) is freely movable in such a manner that the teat cup can follow the animal's movements with a slight resistance, wherein a milking robot includes at least one omnidirectionally movable robot arm (19) which acts as a carrier for one of the teat cups (18), characterized in that the robot arm (19), whilst a teat cup is still fitted on a teat of the animal, can be brought to outside the reach of an animal standing in a relevant milking box (1).

2. A construction as claimed in claim 1, characterized in that a milk tube (27) is of such a construction that during milking it is movable with a slight resistance over or at a slight height above the floor of a milking box (1).

3. A construction as claimed in any one of the preceding claims, characterized in that during milking a milk tube (27) extends freely movably under a robot arm (24).

4. A construction as claimed in any one of the preceding claims, characterized in that during milking a milk tube (27) extends in a mainly horizontal plane and is movable in this plane.

5. A construction as claimed in any one of the preceding claims, characterized in that, in a plan view, a milk tube (27) extends in the shape of a loop, more in particular in the shape of a U.

6. A construction as claimed in any one of the preceding claims, characterized in that during milking a milk tube (27) extends, in a plan view, from the teat cup (18) obliquely forwardly in the direction of walk of the animal and outwardly and from there in the shape of a loop.

7. A construction as claimed in any one of the preceding claims, characterized in that the milk tubes (27) extend from the teat cups (18) on both sides of a milking box (1) to beside the milking box (1).

8. A construction as claimed in any one of the preceding claims, characterized in that a milk tube (27) extends in the shape of a loop to a point of connection (29) for a milk line provided at the side of a milking box (1).

9. A construction as claimed in any one of the preceding claims, characterized in that a milking robot includes at least two robot arms (19) which are independently movable relative to each other, and act as a carrier for one or more teat cups (18), these robot arms (19) being arranged on both sides of or near a milking box (1) and include adjusting means which are arranged one above the other.

10. A construction as claimed in claim 9, characterized in that the adjusting means include a four-bar linkage (20), with the aid of which a robot arm (19) is movable in height.

11. A construction as claimed in claim 10, characterized in that the adjusting means include a further four-bar linkage (23), with the aid of which a teat cup (18) is movable from the side of a milking box (1) to under the udder of an animal present therein.

12. A construction as claimed in claims 10 and 11, characterized in that the further four-bar linkage (23) is connected, capable of rotating around a mainly vertical shaft (25), to the said first four-bar linkage (20).

13. A construction as claimed in any one of the preceding claims, characterized in that in a robot arm (24) there is accommodated an adjusting cylinder, more in particular a pneumatic cylinder, with the aid of which, through the intermediary of a flexible element (26), such as a cord, a teat cup (18) can be pulled up to the robot arm (24)

14. A construction as claimed in any one of the preceding claims, characterized in that a detector (10), more specifically a laser detector, for the determination of the position of the teats of the animals is present, this detector (10) being disposed on a separate robot arm construction (30).

15. A construction as claimed in claim 14, characterized in that the detector (10) is movable from a rest position at or near the side of a milking box (1) to a first and a second working position, whilst in one of these working positions the position of a teat of an animal standing in the milking box (1) can be determined.

16. A construction as claimed in any one of the preceding claims, characterized in that at or near both sides of a milking box (1) spray heads (36) are provided which are connected to a washing circuit and to which the teat cups (18) are connectable independently of each other.

## Patentansprüche

1. Anlage mit einer Vorrichtung zum automatischen Melken von Tieren, wie z. B. Kühen, die eine oder mehrere Melkboxen (1) und einen oder mehrere Melkroboter zum automatischen Anschließen von Zitzenbechern (18) an die Zitzen der Tiere aufweist, wobei während des Melkens eine mit einem Zitzenbecher (18) verbundene Milchleitung (27) derart frei bewegbar ist, daß der Zitzenbecher den Bewegungen des Tieres mit geringem Widerstand folgen kann, wobei ein Melkroboter mindestens einen in alle Richtungen bewegbaren Roboterarm (19) aufweist, der als Träger für einen der Zitzenbecher (18) dient, dadurch gekennzeichnet, daß der Roboterarm (19) bei noch an eine Zitze des Tieres angeschlossenem Zitzenbecher außer Reichweite eines in einer entsprechenden Melkbox (1) stehenden Tieres gebracht werden kann.

2. Anlage nach Anspruch 1,
dadurch gekennzeichnet, daß eine Milchleitung (27) derart ausgebildet ist, daß sie während des Melkens mit geringem Widerstand über oder in geringer Höhe über den Boden einer Melkbox (1) bewegbar ist.

3. Anlage nach einem der vorhergehenden Ansprüche,
dadurch gekennzeichnet, daß sich eine Milchleitung (27) während des Melkens frei beweglich unter einem Roboterarm (24) erstreckt.

4. Anlage nach einem der vorhergehenden Ansprüche,
dadurch gekennzeichnet, daß sich eine Milchleitung (27) während des Melkens in einer überwiegend horizontalen Ebene erstreckt und in dieser Ebene bewegbar ist.

5. Anlage nach einem der vorhergehenden Ansprüche,
dadurch gekennzeichnet, daß sich eine Milchleitung (27) in Draufsicht in Form einer Schlaufe, insbesondere in Form eines U erstreckt.

6. Anlage nach einem der vorhergehenden Ansprüche,
dadurch gekennzeichnet, daß sich eine Milchleitung (27) während der Melkens in Draufsicht vom Zitzenbecher (18) aus in Laufrichtung des Tieres schräg nach vorn und außen und von dort in Form einer Schlaufe erstreckt.

7. Anlage nach einem der vorhergehenden Ansprüche,
dadurch gekennzeichnet, daß sich die Milchleitungen (27) von den Zitzenbechern (18) auf beiden Seiten einer Melkbox (1) neben die Melkbox (1) erstrecken.

8. Anlage nach einem der vorhergehenden Ansprüche,
dadurch gekennzeichnet, daß sich eine Milchleitung (27) in Form einer Schlaufe zu einem auf der Seite einer Melkbox (1) angeordneten Anschlußpunkt (29) für eine Milchleitung erstreckt.

9. Anlage nach einem der vorhergehenden Ansprüche,
dadurch gekennzeichnet, daß ein Melkroboter mindestens zwei Roboterarme (19) aufweist, die unabhängig voneinander bewegbar sind und als Träger für einen oder mehrere Zitzenbecher (18) dienen, wobei diese Roboterarme (19) auf beiden Seiten oder nahe einer Melkbox (1) angeordnet sind und Stellvorrichtungen aufweisen, die übereinander angeordnet sind.

10. Anlage nach Anspruch 9,
dadurch gekennzeichnet, daß die Stellvorrichtungen ein Gelenkviereck (20) enthalten, mittels dessen ein Roboterarm (19) höhenbewegbar ist.

11. Anlage nach Anspruch 10,
dadurch gekennzeichnet, daß die Stellvorrichtungen ein weiteres Gelenkviereck (23) enthalten, mittels dessen ein Zitzenbecher (18) von der Seite einer Melkbox (1) unter das Euter eines darin befindlichen Tieres bewegbar ist.

12. Anlage nach den Ansprüchen 10 und 11,
dadurch gekennzeichnet, daß das weitere Gelenkviereck (23) um eine überwiegend vertikale Achse (25) drehbar mit dem ersten Gelenkviereck (20) verbunden ist.

13. Anlage nach einem der vorhergehenden Ansprüche,
dadurch gekennzeichnet, daß in einem Roboterarm (24) ein Stellzylinder, insbesondere ein pneumatischer Zylinder angeordnet ist, mittels dessen über ein flexibles Element (26), wie z. B. ein Seil, ein Zitzenbecher (18) an den Roboterarm (24) herangezogen werden kann.

14. Anlage nach einem der vorhergehenden Ansprüche,
dadurch gekennzeichnet, daß ein Detektor (10), insbesondere ein Laserdetektor, zur Ermittlung der Position der Zitzen der Tiere vorhanden ist, wobei dieser Detektor (10) an einer separaten Roboterarm-Vorrichtung (30) angeordnet ist.

15. Anlage nach Anspruch 14,
dadurch gekennzeichnet, daß der Detektor (10) aus einer Ruhelage auf oder nahe der Seite einer Melkbox (1) in eine erste und eine zweite Arbeitslage bewegbar ist, wobei in einer dieser Arbeitslagen die Position einer Zitze eines in der Melkbox (1) stehenden Tieres ermittelt werden kann.

16. Anlage nach einem der vorhergehenden Ansprüche,
dadurch gekennzeichnet, daß auf oder nahe beiden Seiten einer Melkbox (1) Sprühköpfe (36) angeordnet sind, die mit einem Waschkreislauf verbunden sind, und an die die Zitzenbecher (18) unabhängig voneinander anschließbar sind.

## Revendications

1. Installation comportant un ensemble de traite automatique d'animaux, tels que des vaches, ayant un ou plusieurs box de traite (1) et un ou plusieurs robots de traite pour accoupler de manière automatique des gobelets trayeurs (18) aux frayons des animaux, tandis que lors de la traite un tube à lait (28) connecté à un gobelet frayeur (18) est mobile de manière libre d'une manière telle que le gobelet frayeur peut suivre les mouvements de l'animal avec une faible résistance, dans lequel un robot de traite comporte au moins un bras de robot mobile omnidirectionnellement (19) qui agit en tant que support d'un des gobelets frayeurs (18), caractérisée en ce que le bras de robot (19), tandis qu'un gobelet frayeur est toujours fixé à un trayon de l'animal, peut être apporté en dehors de la portée d'un animal situé dans un box de traite concerné (1).

2. Installation selon la revendication 1, caractérisée en ce qu'un tube à lait (27) a une conformation telle que lors de la traite, il est mobile avec une faible résistance sur ou au niveau d'une légère hauteur au-dessus du sol d'un box de traite (1).

3. Installation selon l'une quelconque des revendications précédentes, caractérisée en ce que lors de la traite un tube à lait (27) s'étend de manière librement mobile sous un bras de robot (24).

4. Installation selon l'une quelconque des revendications précédentes, caractérisée en ce que lors de la traite, un tube à lait (27) s'étend dans un plan principalement horizontal, et est mobile dans ce plan.

5. Installation selon l'une quelconque des revendications précédentes, caractérisée en ce que, dans une vue de dessus, un tube à lait (27) s'étend en forme de boucle, plus particulièrement en forme d'un U.

6. Installation selon l'une quelconque des revendications précédentes, caractérisée en ce que lors de la traite, un tube à lait (27) s'étend, dans une vue de dessus, à partir du gobelet trayeur (18) obliquement vers l'avant dans la direction de déplacement de l'animal et vers l'extérieur et à partir de là sous la forme d'une boucle.

7. Installation selon l'une quelconque des revendications précédentes, caractérisée en ce que les tubes à lait (27) s'étendent à partir des gobelets trayeurs (18) des deux côtés d'un box de traite (1) vers le côté du box de traite (1).

8. Installation selon l'une quelconque des revendications précédentes, caractérisée en ce qu'un tube à lait (27) s'étend sous la forme d'une boucle vers un point de connexion (29) destiné à une ligne de lait agencée sur le côté d'un box de traite (1).

9. Installation selon l'une quelconque des revendications précédentes, caractérisée en ce qu'un robot de traite comporte au moins deux bras de robot (19) qui sont indépendamment mobiles l'un par rapport à l'autre, et agissent en tant que support d'un ou plusieurs gobelets trayeurs (18), ces bras de robot (19) étant agencés de chaque côté d'un box de traite (1) ou à proximité de celui-ci, et comportent des moyens d'ajustement qui sont agencés les uns au-dessus des autres.

10. Installation selon la revendication 9, caractérisée en ce que les moyens d'ajustement comportent une première liaison à quatre barres (20), à l'aide de laquelle un bras de robot (19) est mobile en hauteur.

11. Installation selon la revendication 10, caractérisée en ce que les moyens d'ajustement comportent une autre liaison à quatre barres (23), à l'aide de laquelle un gobelet trayeur (18) est mobile à partir du côté d'un box de traite (1) vers le dessous du pis d'un animal présent dans celui-ci.

12. Installation selon les revendications 10 et 11, caractérisée en ce que l'autre liaison à quatre barres (23) est connectée, pour pouvoir tourner autour d'un arbre principalement vertical (25), à ladite première liaison à quatre barres (20).

13. Installation selon l'une quelconque des revendications précédentes, caractérisée en ce qu'un vérin d'ajustement est reçu dans un bras de robot (24), plus particulièrement un vérin pneumatique, à l'aide duquel par l'intermédiaire d'un élément flexible (26), tel qu'une corde, un gobelet trayeur (18) peut être tiré vers le bras de robot (24).

14. Installation selon l'une quelconque des revendications précédentes, caractérisée en ce qu'un détecteur (10), plus spécifiquement un détecteur à laser, pour déterminer la position des trayons de l'animal est présent ce détecteur (10) étant disposé sur un système de bras de robot séparé (30).

15. Installation selon la revendication 14, caractérisée en ce que le détecteur (10) est mobile à partir d'une position de repos située au niveau d'un box de traite (1) ou à proximité de celui-ci, vers une première et une seconde position de travail, tandis que dans une de ces positions de travail, la position d'un trayon d'un animal situé dans le box de traite (1) peut être déterminée.

16. Installation selon l'une quelconque des revendications précédentes, caractérisée en ce qu'au niveau de chaque côté d'un box de traite (1) ou à proximité de ceux-ci, des têtes de pulvérisation (36) sont agencées qui sont connectées à un circuit de lavage et auxquelles les gobelets trayeurs (18) peuvent être connectés indépendamment les uns des autres.
